# EUROPÄISCHE PATENTSCHRIFT

(11) **EP 1 841 913 B1**
(45) Veröffentlichungstag und Bekanntmachung des Hinweises auf die Patenterteilung: **26.01.2011**
(21) Anmeldenummer: 05850219.6
(22) Anmeldetag: 01.12.2005
(51) Int. Cl.: D06N 3/00, C08K 7/14, C08K 5/00, E04B 1/94

(54) **ABDICHTFOLIE FÜR DEN BAUTENSCHUTZ**
SEALING FILM FOR BUILDING PROTECTION
PELLICULE D'ETANCHEITE DESTINEE A LA PROTECTION DE BATIMENT

(30) Priorität: 24.01.2005 DE 102005003295
(43) Veröffentlichungstag der Anmeldung: 10.10.2007
(73) Patentinhaber: Henkel AG & Co. KGaA, 40589 Düsseldorf (DE)
(72) Erfinder: WELTER, Werner, 59427 Unna (DE); KÖHLER, Karl, 41748 Viersen (DE); SIMONIS, Udo, 63549 Ronneburg (DE)
(86) Internationale Anmeldenummer: PCT/EP2005/012809
(87) Internationale Veröffentlichungsnummer: WO 2006/079383

(56) Entgegenhaltungen:
- EP-A- 0 855 462
- DE-A1- 3 111 899
- DE-A1- 3 200 824
- DE-A1- 19 609 311
- DE-U1- 20 023 324
- GB-A- 1 425 079
- US-A- 5 314 530
- US-A- 5 496 881
- US-A1- 2004 235 379
- US-B1- 6 316 532
- DATABASE WPI Section Ch, Week 200554 Derwent Publications Ltd., London, GB; Class A14, AN 2003-061380 XP002395781 & JP 2002 210894 A (HIRAOKA SHOKUSEN KK) 31. Juli 2002 (2002-07-31)

## Beschreibung

Die Erfindung betrifft eine Abdichtfolie für den Bautenschutz, die wasserdicht ist und eine hohe Reißfestigkeit und Flexibilität aufweist.

Abdichtfolien für den Bautenschutz sind seit langem in vielen verschiedenen Ausführungsformen bekannt. Eine Abdichtfolie für den Bautenschutz, die als Fassadenfolie Verwendung findet (DE 200 23 324 U1), aber auch im Dachbereich eingesetzt wird, weist einen wasser- und luftdichten thermoplastischen Kunststoff oder ein Verbundmaterial aus Kunststoff und Aluminiumfolie als Mittellage auf. Darauf aufgebracht sind beidseitig überputzbare Außenlagen aus Vlies, Gewebe, Gewirke, etc. Diese sind gleichzeitig die Trägermaterialien (Substrate), die die Reißfestigkeit und die gewünschten Dehnungseigenschaften bestimmen.

Aus diesem Stand der Technik ist der Einsatzbereich bei Fassadenfolien bekannt. Insbesondere werden die unterschiedlichen Anforderungen an die Durchlässigkeit für Wasserdampf für verschiedene Anbausituationen der Fassadenfolie oder als Dampfsperrfolie im Dachbereich erläutert.

Eine Fassadenfolie bedarf einer besonders hohen Reißfestigkeit und Flexibilität, weil sie häufig mit engen Bogenradien verlegt werden muß. Dazu hat sie bevorzugt eine Dicke von weniger als 1 mm. Das Flächengewicht der Tragschicht(en) liegt zwischen 20 g/m² und 300 g/m², das Flächengewicht der Beschichtung aus Kunststoff liegt bei 20 g/m² bis 250 g/m*²,* bevorzugt bei 80 g/m² bis 130 g/m², Das Gesamt-Flächengewicht liegt bevorzugt bei 300 g/m². Ist sie überputzbar, wie in der DE 200 20 324 U1 beschrieben, so muß sie auch das Putzgewicht tragen und den Putz haftend halten können. Überdies muß eine Abdichtfolie als Fassadenfolie auch auf dem Mauerwerk und/oder auf Fensterleibungen verklebt werden können.

Bei der bekannten, zuvor erläuterten Abdichtfolie für den Bautenschutz, von der die Erfindung ausgeht, wird dem Aspekt des Brandschutzes keine ausdrückliche Beachtung geschenkt. Selbstverständlich ist für alle Abdichtfolien für den Bautenschutz jedoch stets auch der Brandschutz im Auge zu behalten. Dafür gilt u.a. die Norm DIN 4102, die sich mit dem "Brandverhalten von Baustoffen und Bauteilen" befaßt. Die Baustoffklassen A betreffen nicht brennbare Baustoffe, während die Baustoffklassen B im Grundsatz brennbare Baustoff betreffen, die jedoch unterschiedlich weitreichend mit Flammschutzmittel ausgerüstet sind. Im einzelnen darf insbesondere auf die DIN 4102-1, 4102-2 und 4102-4 verwiesen werden.

Im Bereich der Abdichtfolien für den Bautenschutz, insbesondere für den Einsatz als Fassadenfolle, gibt es derzeit nur Produkte der Baustoffklasse B2 "normal entflammbar". Erhöht man in solchen Abdichtfolien den Anteil chemischer Flammschutzmittel, so verliert die Abdichtfolie einen Teil ihrer Flexibilität, sie wird steifer, die Beschichtung ist spröder. Bei dünnen, sehr flexiblen Folien benötigt man zusätzliche Weichmacher. Diese beeinträchtigen die Flammschutzwirkung,

Eine weitere bekannte Abdichtfolie für den Bautenschutz, die wasserdicht ist und eine hohe Reißfestigkeit und Flexibilität aufweist (DE 196 09 311 A1), berücksichtigt ausdrücklich auch Aspekte des Brandschutzes. Sie erreicht die Baustoffklasse B2 der DIN 4102 mit einem gewebten, gewirkten oder vliesartige textilen Trägermaterial als Tragschicht und einer einseitig oder beidseitig aufgetragenen Beschichtung, die als wässrige Dispersion mit einer Viskosität von bis
zu 3.000 mPas auf die Tragschicht mit mechanischen Auftragsmethoden aufgetragen und darauf eingetrocknet worden ist. Die als wässrige Dispersion vorliegende Beschichtung enthält einen Anteil von bis zu 30 Gew.-% eines Flammschutzmittels. Basis dieser Dispersion ist ein passend eingestelltes Polyurethan mit bis zu 60 Gew.-%. Geeignete chemische Flammschutzmittel werden in der DE 196 09 311 A1 angegeben. Alle übrigen Komponenten werden im Detail und mit Beispielen beschrieben. Für das die Tragschicht bildende Trägermaterial werden insbesondere Polyethylen-, Polypropylen-, Polyester- und Glasfasern angegeben, die besonders bevorzugt in Vliesen mit einem Flächengewicht von 50 bis 300 g/m² verarbeitet werden sollen. Im einzelnen darf insgesamt auf den Offenbarungsgehalt der DE 196 09 311 A1 hingewiesen werden, der durch Bezugnahme in den Offenbarungsgehalt der vorliegenden Patentanmeldung mit einbezogen wird.

Bei der zuvor beschriebenen, bekannten Abdichtfolie für den Bautenschutz wird über eine eigene schwer entflammbare Ausrüstung des Trägermaterials selbst nichts gesagt. Es ist dort erst die Beschichtung, die zu der insgesamt gegebenen Schwerentflammbarkeit führt, die es ermöglicht, daß diese Abdichtfolie am Ende in Baustoffklasse B2 nach DIN 4102 fällt und eine sehr hohe Wasserdichtigkeit mit einer sehr hohen Wasserdampfdurchlässigkeit verbindet.

Bei der zuvor beschriebenen, bekannten Abdichtfolie für den Bautenschutz wird den Besonderheiten nicht Rechnung getragen, die für Fassadenfolien von Bedeutung sind. Insbesondere sind dies Überputzbarkeit der Abdichtfolie und Verklebbarkeit auf Mauerwerk und Fensterleibungen,

Der Erfindung liegt nun das Problem zugrunde, eine Abdichtfolie anzugeben, die eine ' möglichst hohe Feuerwidarstandsklasse erreicht, insbesondere die die Baustoffklasse B1 "schwer entflammbar" oder eine noch höhere Stufe des Brandschutzes erreicht und gleichwohl auch als Fassadenfolie einsetzbar ist.

Die zuvor aufgezeigte Problematik ist gelöst bei einer Abdichtfolie für den Bautenschutz mit den Merkmalen von Anspruch 1.

Bei dieser Abdichtfolie für den Bautenschutz, die als Fassadenfolie bestimmt und geeignet ist, ergibt sich die gewünschte Flexibilität und die Handhabbarkeit unter Baustellenbedingungen mit einem Aufbau, der dem Aufbau der Abdichtfolie des Ausgangspunkts für die Lehre (DE 200 23 324 U1) gleicht. Bei dieser Abdichtfolie ist die Tragschicht außenliegend angeordnet. Sie bringt also von Hause aus bereits die notwendige Überputzbarkeit und Haftung für Putz und Klebstoffe mit, die bereits beim Ausgangspunkt für die Lehre der vorliegenden Erfindung gegeben ist.

Hier wird die Baustoffklasse B1 "schwer entflammbar" oder sogar eine noch höher liegende Baustoffklasse des Brandschutzes dadurch erreicht, daß eine bestimmte Zusammensetzung der hier als eigenständige Folie auftretenden Beschichtung gewählt wird. Diese Zusammensetzung wird im Anspruch 1 angegeben. Hinzu kommt aber, daß, anders als bei dem den Ausgangspunkt bildenden Stand der Technik, auch das die Tragschicht bildende Vlies, Gewebe, Gewirke oder Gelege auf der Basis von Glasfasern und/oder Acrylfasern selbst bereits schwer entflammbar ausgerüstet ist.

Es ist erfindungsgemäß erkannt worden, daß das außenliegende Vlies, Gewebe, Gewirke oder Gelege selbst dann, wenn es aus Glasfasern und/oder Acrylfasern ausgebildet ist, auf der Oberfläche der folienartigen Beschichtung auf PVC-Basis Hitzenester bildet. Das Vlies, Gewebe, Gewirke oder Gelege wirkt, wenn es selbst bereichsweise entflammt, als Brandbeschleuniger für die folienartige Beschichtung auf PVC-Basis. Diese Funktion nimmt man erfindungsgemäß dem Vlies, Gewebe, Gewirke oder Gelege durch die auch dort bereits von Hause aus durchgeführte Ausrüstung mit einem Flammschutzmittel, so daß dieses Vlies, Gewebe, Gewirke oder Gelege für sich bereits die Baustoffklasse B1 "schwer entflammbar" erfüllt.

Erfindungsgemäß ist erkannt worden, daß damit auch bei einer dünnen folienartigen Beschichtung mit relativ wenig Flammschutzmittel insgesamt ein Entflammen der Abdichtfolie hinreichend lange verzögert werden kann, so daß die Baustoffklasse B1 oder sogar eine noch höhere Baustoffklasse nach DIN 4102-1 bzw. höherer Feuerwiderstand erreicht wird.

Bevorzugte Ausgestaltungen dieser Abdichtfolie sind Gegenstand der Unteransprüche.

In einer Modifikation der erfindungsgemäßen Abdichtfolie wird der Anteil an Weichmacher auf der Basis von Polyaddipat verringert und statt dessen ein chloriertes Polyethylen hinzugefügt- Dieses Polyethylen ist so modifiziert, daß es neben der weichmachenden Wirkung für das PVC auch noch eine brandhemmende Wirkung hat.

Hinsichtlich des Flammschutzmittels gibt Anspruch 3 eine Reihe von Hinweisen. Im übrigen wird hierzu auch auf die DE 196 09 311 A1 hingewiesen.

Schließlich empfiehlt es sich, die erfindungsgemäße Abdichtfolie in der klassischen Weise, also mit beidseits aufkaschierten Tragschichten aus Vlies, Gewebe, Gewirke oder Gelege auf der Basis von Glasfasern und/oder Acrylfasern zu realisieren.

Im folgenden wird die Erfindung einer anhand einer lediglich Ausführungsbeispiele darstellenden Zeichnung näher erläutert.

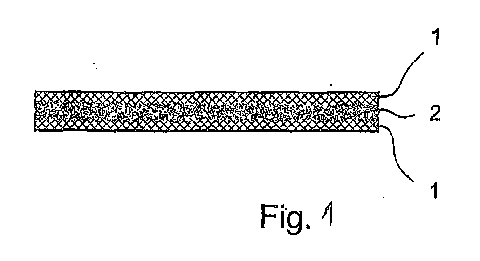

In der Zeichnung zeigt
- Fig. 1: in einem Schnitt, stark schematisiert, die Maße der Verdeutlichung halber nicht maßstäblich wiedergegeben, ein Ausführungsbeispiel einer Abdicht- folie für den Bautenschutz gemäß der Erfindung.

Fig. 1 zeigt eine Abdichtfolie für den Bautenschutz gemäß der Erfindung. Hier sind zwei außenliegende Tragschichten 1 aus einem reißfesten und flexiblen Trägermaterial vorgesehen. Bei dem Trägermaterial handelt es sich jeweils um ein für Wasserdampf diffusionsoffenes Vlies, Gewebe, Gewirke oder Gelege auf der Basis von Glasfasern und/oder Acrylfasern. Ist nur eine Tragschicht 1 vorgesehen, so befindet sich daran untrennbar verbunden einseitig eine folienartige Beschichtung 2, sind zwei Tragschichten 1 vorgesehen, so befindet sich diese folienartige Beschichtung 2 zwischen den beiden Tragschichten 1, mit beiden untrennbar verbunden.

Erfindungsgemäß ist zunächst das die jeweilige Tragschicht 1 bildende Trägermaterial als solches bereits schwer entflammbar ausgerüstet. Zur Ausrüstung eines solchen Vlies, Gewebes, Gewirkes oder Geleges auf der Basis von Glasfasern und/oder Acrylfasern zur Erreichung der Schwerentflammbarkeit der Baustoffklasse B1 kann man vorsehen, daß eine Tränkung mit Borsalzen oder, besser noch, eine Beimischung von Carbonfasern erfolgt.

Im übrigen ist vorgesehen, daß die folienartige Beschichtung 2, die im vorliegenden Fall eine eigenständig extrudierte Folie sein wird, folgende Bestandteile aufweist:
a) 10 bis 80 Gew.-%, vorzugsweise 50 Gew.-%, eines weichgemachten, bitumenverträglichen PVC,
b) 1 bis 30 Gew.-%, vorzugsweise 10 Gew.-% eines Nitrilkautschuks oder eines Acrylkautschuks,
c) 1 bis 10 Gew.-%, vorzugsweise 3 Gew.-% bis 6 Gew.-%, eines Flammschutzmittels,
d) 20 Gew.-% bis 50 Gew.-%, vorzugsweise 30 Gew.-% bis 40 Gew.-%, eines Weichmachers auf der Basis von Polyaddipat.

Hinzukommen übliche Zusatzmittel wie Stabilisatoren, Füllstoffe, Verarbeitungshilfen und Farbstoffe.

Nach einer Variante der hier beschriebenen Abdichtfolie kann man auch vorsehen, daß der Anteil des Polyaddipats teilweise bzw. auch komplett durch chloriertes PE (PE-C) ersetzt werden kann. Damit erreicht man einen optimalen Ausgleich zwischen den verschiedenen Zielen, nämlich Flexibilität, Reißfestigkeit, Zähigkeit und Entflammbarkeit. Außerdem ist eine solche Abdichtfolie langjährig standfest, verändert also ihre Charakteristika über viele Jahre nicht.

Als Flammschutzmittel kommen beispielsweise in Frage ein Antimontrioxid und/oder ein Aluminiumhydroxid und/oder ein Magnesiumhydroxid und/oder bromierte Phenole. Im übrigen kann hier auch auf die DE 196 09 311 A1 hingewiesen werden, wo eine Vielzahl von möglichen Flammschutzmitteln angegeben sind,

Im Grundsatz empfiehlt es sich, daß die erfindungsgemäße Abdichtfolie so aufgebaut ist wie die Abdichtfolie, die den Ausgangspunkt für die Lehre der vorliegenden Erfindung bildet (DE 200 23 324 U1), nämlich mit entsprechenden Tragschichten 1 auf beiden Seiten der folienartigen Beschichtung 2.

Bei der Produktion einer Abdichtfolie dieses Ausführungsbeispiels werden die Tragschicht 1 bzw. die Tragschichten 1 im laufenden Produktionsprozeß, so lange der Kunststoff der folienartigen Beschichtung 2 noch plastisch ist, also bei Temperaturen zwischen 130 und 200°C. untrennbar mit der folienartigen Beschichtung 2 verbunden. Die von dem Vlies, Gewebe, Gewirke oder Gelege auf der Außenseite der Abdichtfolie geschaffene. Oberflächenrauhigkeit bietet die bekannte gute Grundlage für ein Überputzen und ein Verkleben an Mauerwerk und Fensterleibungen.

Aufgrund der Zusammensetzung der erfindungsgemäßen Abdichtfolie läßt sich auch mit dieser Variante die Baustoffklasse B1 der DIN 4102 "schwer entflammbar" oder sogar eine noch höhere Klasse erreichen.

## Patentansprüche

1. Abdichtfolie für den Bautenschutz, die wasserdicht ist und eine hohe Reißfestigkeit und Flexibilität aufweist,
mit mindestens einer Tragschicht (1) aus einem reißfesten und flexiblen Trägermaterial, nämlich einem für Wasserdampf diffusionsoffenen Vlies, Gewebe, Gewirke oder Gelege auf der Basis von Glasfasern und/oder Acrylfasern, und mit einer folienartigen Beschichtung (2), die mit der Tragschicht (1) untrennbar verbunden ist, wobei das die Tragschicht (1) bildende Trägermaterial als solches schwer entflammbar ausgerüstet ist und
wobei die folienartige Beschichtung (2) aufweist
a) 10 bis 80 Gew.-% eines weichgemachten, bitumenverträglichen PVC,
b) 1 bis 30 Gew.-% eines Nitrilkautschuks oder eines Acrylkautschuks,
c) 1 bis 10 Gew.-%,eines Flammschutzmittels,
d) 20 Gew.-% bis 50 Gew.-% eines Weichmachers auf der Basis von Polyaddipat, sowie Anteile von Stabilisatoren, Füllstoffen, Verarbeitungshilfen und/oder Farbstoffen.

2. Abdichtfolie nach Anspruch 1, **dadurch gekennzeichnet, daß** der Anteil in d) beträgt:
d) 20 Gew.-% bis 50 Gew.-% eines Weichmachersystems auf der Basis eines chlorierten Polyethylens.

3. Abdichtfolie nach Anspruch 1 oder 2, **dadurch gekennzeichnet, daß** das Flammschutzmittel ein Antimontrioxid und/oder ein Aluminiumhydroxid und/oder ein Magnesiumhydroxid und/oder bromierte Phenole aufweist.

4. Abdichtfolie nach einem der Ansprüche 1 bis 3, **dadurch gekennzeichnet, daß** die folienartige Beschichtung (2) auf beiden Seiten mit jeweils einer Tragschicht (1) gemäß Anspruch 1 untrennbar verbunden ist.

## Claims

1. A sealing film for building protection which is watertight and exhibits elevated tear strength and flexibility,
having at least one support layer (1) made of a tear-resistant and flexible support material, namely of a water vapour-breathable nonwoven, woven, knitted or laid fabric based on glass fibres and/or acrylic fibres, and having a film-like coating (2), which is inseparably bonded with the support layer (1), wherein the support material forming the support layer (1) is in itself made to be of low flammability and wherein the film-like coating (2) comprises
a) 10 to 80 wt.% of a plasticised, bitumen-compatible PVC,
b) 1 to 30 wt.% of a nitrile rubber or of an acrylic rubber,
c) 1 to 10 wt.% of a flame retardant,
d) 20 wt.% to 50 wt.% of a polyadipate-based plasticiser, together with proportions of stabilisers, fillers, processing aids and/or dyes.

2. A sealing film according to claim 1, **characterised in that** the proportion in d) amounts to: d) 20 wt.% to 50 wt.% of a plasticiser system based on a chlorinated polyethylene.

3. A sealing film according to claim 1 or claim 2, **characterised in that** the flame retardant comprises an antimony trioxide and/or an aluminium hydroxide and/or a magnesium hydroxide and/or brominated phenols.

4. A sealing film according to any one of claims 1 to 3, **characterised in that** the film-like coating (2) is inseparably bonded on both sides in each case with a support layer (1) according to claim 1.

## Revendications

1. Pellicule d'étanchéité destinée à la protection de bâtiment, qui est étanche à l'eau et présente une résistance au déchirement élevée et une flexibilité élevée ;
comprenant au moins une couche de support (1) constituée d'un matériau de support flexible et résistant au déchirement, plus précisément un non-tissé, un tissu, une étoffe ou une nappe ouvert à la diffusion de la vapeur d'eau, à base de fibres de verre et/ou de fibres acryliques et comprenant une enduction pelliculaire (2) qui est reliée de manière inséparable à la couche de support (1), la matière de support formant la couche de support (1) étant fournie comme telle sous forme difficilement inflammable, et
dans laquelle l'enduction pelliculaire (2) présente
a) à concurrence de 10 à 80 % en poids, un PVC plastifié compatible avec le bitume ;
b) à concurrence de 1 à 30 % en poids, un caoutchouc nitrile ou un caoutchouc acrylique ;
c) à concurrence de 1 à 10 % en poids, un agent ignifuge ;
d) à concurrence de 20 % en poids à 50 % en poids, un plastifiant à base d'un polyadipate, ainsi que des fractions de stabilisateurs, de matières de remplissage, d'adjuvants de traitement et/ou de colorants.

2. Pellicule d'étanchéité selon la revendication 1, **caractérisée en ce que** la fraction dans d) représente :
d) à concurrence de 20 % en poids à 50 % en poids, un système de plastifiant à base d'un polyéthylène chloré.

3. Pellicule d'étanchéité selon la revendication 1 ou 2, **caractérisée en ce que** l'agent ignifuge présente un trioxyde d'antimoine et/ou de l'hydroxyde d'aluminium et/ou un hydroxyde de magnésium et/ou des phénols bromés.

4. Pellicule d'étanchéité selon l'une quelconque des revendications 1 à 3, **caractérisée en ce que** l'enduction pelliculaire (2) est reliée de manière inséparable, des deux côtés, à respectivement une couche de support (1) selon la revendication 1.
